# EUROPÄISCHE PATENTSCHRIFT

(11) **EP 3 953 207 B1**
(45) Veröffentlichungstag und Bekanntmachung des Hinweises auf die Patenterteilung: **09.12.2026**
(21) Anmeldenummer: 20717149.7
(22) Anmeldetag: 02.04.2020
(51) Int. Cl.: B60L 53/12

(54) **SELBSTKOMPENSIERTE PRIMÄRE INDUKTIONSSPULE**
SELF-COMPENSATING PRIMARY INDUCTION COIL
BOBINE D'INDUCTION PRIMAIRE AUTO-COMPENSÉE

(30) Priorität: 08.04.2019 DE 102019109110
(43) Veröffentlichungstag der Anmeldung: 16.02.2022
(73) Patentinhaber: Industrieanlagen-Betriebsgesellschaft mbH, 85521 Ottobrunn (DE)
(72) Erfinder: MEINS, Jürgen, 38126 Braunschweig (DE); EFFENBERGER, Ralf, 21382 Brietlingen (DE)
(74) Vertreter: Meissner Bolte Partnerschaft mbB
(86) Internationale Anmeldenummer: PCT/EP2020/059355
(87) Internationale Veröffentlichungsnummer: WO 2020/207888

(56) Entgegenhaltungen:
- US-A1- 2012 248 892
- US-A1- 2018 109 292

## Beschreibung

Die Erfindung betrifft einen Spulenkörper zum Erzeugen eines Magnetfelds für eine Spule und eine Vorrichtung mit mindestens einem derartigen Spulenkörper für ein induktives Ladesystem, insbesondere zur berührungsfreien induktiven Energieübertragung an Transportmittel oder an elektronische Geräte.

Im Folgenden sind unter dem Begriff "Transportmittel" durch einen eigenen Motor angetriebene Fahrzeuge, wie z.B. Kraftwagen, Krafträder und Zugmaschinen, zu verstehen. Derartige Fahrzeuge können an Schienen oder nicht an Schienen gebunden sein. Der Motor selbst kann einen Verbrennungsmotor, einen Elektromotor oder eine Kombination der beiden beinhalten.

Mit der Formulierung "elektronische Geräte" sind Elektro- und Elektronikgeräte gemeint, die insbesondere mobil bzw. transportabel sind, wie z.B. Mobiltelefone.

Unter dem Begriff "induktives Ladesystem" wird ein System zur Energieübertragung mittels magnetischer Wechselfelder verstanden. Das System weist hierzu einen Primärteil bzw. -einrichtung (auch als Primär(lade)system bezeichnet) als Energiequelle und einen Sekundärteil bzw. -einrichtung (auch als Sekundär(lade)system bezeichnet) als Energieempfänger auf; ähnlich wie eine Transformatorvorrichtung. Die Primäreinrichtung ist ausgebildet, ein magnetisches Wechselfeld zu erzeugen, und die Sekundäreinrichtung ist ausgebildet, das magnetische Wechselfeld zu empfangen und einen Induktionsstrom aus dem magnetischen Wechselfeld zu erzeugen bzw. zu gewinnen. Die Erzeugung des magnetischen Wechselfelds wird durch Wechselstrom durchflossene elektrische Leiter, insbesondere Spulen, und die Erzeugung des Induktionsstroms durch elektrische Leiter, die im Magnetfeld positioniert sind, erreicht.

Das induktive Laden verwendet anstelle der Energieübertragung über Kabel und Steckverbindungen magnetische Wechselfelder, um Energie von einer Primärseite auf eine Sekundärseite (Fahrzeugseite) induktiv zu übertragen. Neben der Vermeidung von verschleißenden Steckverbindungen an elektrisch leitenden Kontakten ist auch ein Berührungsschutz gegeben. Prinzipiell wird dabei die Transformatortechnik mit einer primärseitigen Erregerspule genutzt, die von Wechselstrom aus dem Stromnetz durchflossen wird. Den in der fahrzeugseitigen Induktionsspule ausgekoppelten Wechselstrom wandelt das im Fahrzeug eingebaute Ladegerät in Gleichstrom und lädt die Fahrzeug eigene Batterie bzw. versorgt den Antrieb.

Aus dem Stand der Technik sind bereits zahlreiche Spulenkörper und deren Topologie bekannt, die bei einer induktiven Primärseite/-vorrichtung eingesetzt werden. Diese Spulenkörper verwenden z.B. isolierten Kupferdraht oder -litze, der/die mehrfach um eine Achse der Spule der Primärvorrichtung gewickelt ist, insbesondere um einen Kern der Spule.

US 2012 / 248 892 A1 beschreibt ein induktives Ladeelement zum Erzeugen oder Empfangen eines Magnetflusses, wobei das Ladeelement einen magnetisch permeablen Kern und zwei im Wesentlichen flache, überlappende Spulen umfasst, die magnetisch mit dem Kern verbunden sind.

US 2018 / 109 292 A1 offenbart ein Aufnahmepad für ein drahtloses Leistungsübertragungssystem (WPT) umfassend einen Ferrit, eine Isolierschicht, eine erste Spulenschicht, eine Zwischenschicht und eine zweite Spulenschicht, die auf der Zwischenschicht angeordnet ist.

Trotz der Zuverlässigkeit dieser bekannten Spulenkörper hat sich mit steigenden technischen Anforderungen, insbesondere an die Energieübertragung und deren Effizienz, in diesem Bereich gezeigt, dass derartige Spulenkörper für die Erzeugung von magnetischen Wechselfeldern zur Energieübertragung sehr schwer und unhandlich und deren Wicklungs- bzw. Herstellungsverfahren aufwendig und kompliziert werden.

Es ist daher Aufgabe der vorliegenden Erfindung, einen alternativen Spulenkörper und einer Primärvorrichtung mit einem derartigen Spulenkörper bereitzustellen, der die zuvor genannten Nachteile überwindet oder zumindest reduziert.

Diese Aufgabe wird durch einen Spulenkörper zum Erzeugen eines Magnetfelds für eine Spule gemäß Anspruch 1 gelöst. Der Spulenkörper ist um einen Kern, insbesondere einen Ferritkern, der Spule wickelbar und weist eine Bandschichtanordnung mit einer ersten Leiterschicht, einer ersten elektrischen Isolationsschicht, einer zweiten Leiterschicht und einer zweiten elektrischen Isolationsschicht auf, wobei die Schichten aufeinander angeordnet sind. Die erste Leiterschicht und die zweite Leiterschicht weisen jeweils mindestens einen Abschnitt auf, der sich mit mindestens einem Abschnitt der anderen Leiterschicht zumindest teilweise überdeckt.

Der Spulenkörper hat den Vorteil, dass das Anordnen bzw. Übereinanderlegen der Schichten und somit dessen Herstellung im Vergleich zum Wickeln von Kupferdrähten, insbesondere beim Wickeln mit verschiedenen Lagen von Kupferdrähten, leichter und präziser durchführbar sind.

Ein weiterer Vorteil des erfindungsgemäßen Spulenkörpers ist die Gewichtsreduktion, die durch die Verwendung der Leiterschichten erfolgt. Andererseits kann durch den Gewichtsvorteil Spulenkörper im Vergleich zu bekannten Spulen bei gleichem Gewicht entsprechend größer dimensioniert werden.

Die Verwendung der Leiterschicht hat des Weiteren den Vorteil, das erzeugte Magnetfeld zu führen. Somit können Magnetfelder je nach Bedarf und Anforderung des Induktionssystems ausgebildet werden, umso eine höhere Energieübertragungseffizienz zu gewährleisten.

Durch die flächenmäßige Überdeckung oder Überlappung zwischen dem Abschnitt der ersten Leiterschicht und dem Abschnitt der zweiten Leiterschicht wird ein kapazitives Element eingebracht. Dieses wirkt sich auf den Blindstrom und - leistung der Spule aus und kann diesen/r entgegenwirken oder, wenn entsprechend dimensioniert, kompensieren. Je nach Form und Größer des bzw. der Abschnitte und deren Überdeckung kann die Größe der Kapazität angepasst werden. Dabei können die Abschnitte rechteckig, quadratisch, oval, kreisförmig und/oder eine andere Form bzw. Formen mit vorbestimmten Dimensionen haben, die z.B. durch Computersimulationen bestimmt wurden, um eine optimale Wechselstromführung mit geringen Blindleistungsverlusten im Spulenkörper zu erreichen.

In einer weiteren vorteilhaften Ausführungsform weisen die erste Leiterschicht und die zweite Leiterschicht jeweils einen oder mehrere Abschnitte auf, wobei jeder Abschnitt von den anderen Abschnitten derselben Leiterschicht elektrisch getrennt und/oder beabstandet ist und mindestens einen Abschnitt der anderen Leiterschicht zumindest teilweise überdeckt. Dadurch können zusätzliche kapazitive Elemente in den Spulenkörper realisiert werden, die dem Blindstrom der Spule entgegenwirken können. Vorteilhafterweise können in anderen Ausführungsformen ein oder mehrere Abschnitte der einen Leiterschicht ein oder mehrere Abschnitte der anderen Leiterschicht nicht, teilweise und/oder vollständig überdecken, und/oder umgekehrt.

Für weitere verschiedene flexible Ausgestaltungsmöglichkeiten des Spulenkörpers kann dieser eine erste Anschlusskontaktierung an einer Seite der Bandschichtanordnung und eine zweite Anschlusskontaktierung an der gegenüberliegenden Seite der Bandschichtanordnung aufweisen, wobei die erste Anschlusskontaktierung mit der ersten oder der zweiten Leiterschicht und die zweite Anschlusskontaktierung mit der ersten oder der zweiten Leiterschicht verbunden sind. Die Anschlusskontaktierungen können als Speisungspunkte des Spulenkörpers mit Wechselstrom dienen, der zwischen der ersten und zweiten Anschlusskontaktierung angelegt werden kann.

Je nach Ausgestaltung der Leiterschichten ist auch die Anordnung bzw. Ausbildung der Anschlusskontaktierungen wichtig, um eine vollständige Stromversorgung des Spulenkörpers zu gewährleisten. Durch die gleichmäßige Stromverteilung innerhalb des Spulenkörpers werden somit auch alle Abschnitte des Spulenkörpers verwendet und somit ein soweit wie möglich homogen geformtes Magnetfeld erzeugt. Daher sind die erste und die zweite Anschlusskontaktierung jeweils an einem eigenen Abschnitt der Leiterschicht vorzugsweise ausgebildet bzw. angeordnet, die die größere Anzahl von Abschnitten aufweist.

Den gleichen zuvor beschriebenen Vorteil ist in einer anderen vorteilhaften Ausgestaltung zu finden, in der die erste und die zweite Anschlusskontaktierung an einem eigenen Abschnitt der ersten und der zweiten Leiterschicht, oder umgekehrt, ausgebildet bzw. angeordnet sind. Dies ist insbesondere der Fall, wenn die Anzahl der Abschnitte der beiden Leiterschichten gleich ist.

Zusätzlich kann eine Kapazität, insbesondere in Form eines Kondensators, am Spulenkörper angeordnet und mit dieser elektrisch verbunden sein. Sie kann zur Selbstkompensation der Primärspule mit bzw. zwischen der ersten und der zweiten Anschlusskontaktierung verbunden sein. Falls die kapazitiven Elemente im Spulenkörper nicht ausreichend sind und der Spulenkörper nicht weiter umdimensioniert werden kann, kann diese/r Zusatzkapazität/-kondensator Aushilfe bieten.

Alternativ zu der Zusatzkapazität und der kabelgebundenen Stromversorgung des Spulenkörpers können die erste und die zweite Anschlusskontaktierung miteinander elektrisch kurzgeschlossen sein. In diesem Fall muss der Spulenkörper durch ein externes Magnetfeld versorgt werden.

Die vorliegende Erfindung bezieht sich des Weiteren auf eine Vorrichtung zum Erzeugen eines Magnetfelds für ein induktives Ladesystem nach Anspruch 8. Hierzu weist es einen Spulenkern, insbesondere in Form eines Ferritkerns, und mindestens einen erfindungsgemäßen Spulenkörper auf, wobei der Spulenkörper, insbesondere die Bandschichtanordnung, mindestens eine Wicklung um den Spulenkern aufweist.

Alternativ zur kabelgebundenen Stromversorgung eines Spulenkörpers weist die Vorrichtung vorzugsweise mindestens eine Erregerspule zum Erzeugen eines Erregermagnetfelds für den Spulenkörper als Primärspule, wobei die Erregerspule um den Ferritkern gewickelt und neben der Primärspule angeordnet ist. Dies hat den Vorteil, dass das Magnetfeld der Erregerspule mittels des Ferritkerns zum Spulenkörper geführt und mit höherer Effizienz genutzt wird.

Es hat sich als vorteilhaft erwiesen, wenn zwei oder mehrere Erregerspulen um den Ferritkern gewickelt sind, die insbesondere beidseitig von der Primärspule angeordnet sind. Neben der Energieversorgung der Primärspule dienen sie zusätzlich als Magnetfeldführungselemente der Primärspule. Somit kann die Durchflutung durch das Magnetfeld erhöht und die Induktivitäts-, der Kapazitätsbildung und damit der Resonanzeigenschaft der Gesamtanordnung der primären Spulenvorrichtung, insbesondere des bzw. der Spulenkörper, flexibilisiert werden.

Um die Energieübertragung zu steuern, ist/sind die Erregerspule/n vorzugsweise verschiebbar zu der Primärspule ausgebildet.

Die Anzahl der Windungen des Spulenkörpers kann kleiner, gleich oder größer als die Anzahl der Windungen der Erregerspule/n sein. Dadurch hat man einen Transformatoreffekt, durch den die induzierte Stromstärke in dem Spulenkörper im Verhältnis zur Stromstärke der Erregerspule festgelegt werden kann.

Zur Sicherung der Leiterschichten vor Kurzschlüssen zueinander ragen die erste und die zweite elektrische Isolationsschicht vorzugsweise an einer oder mehr Seitenrändern der ersten und/oder zweiten Leiterschicht hinaus.

In einer konkreten Ausgestaltungsform sind vorzugsweise die Leiterschichten aus einer Metallschicht, insbesondere aus Aluminium, und die elektrische Isolationsschicht aus einer Kunststoffschicht, insbesondere aus Polypropylen, gebildet.

In einer weiteren konkreten Ausgestaltungsform weist der Spulenkörper eine rechteckige Fläche und mehrere Wicklungen um den Ferritkörper auf.

Die nachfolgende Beschreibung bezieht sich auf bevorzugte Ausführungsbeispiele gemäß der vorliegenden Erfindung, die nicht als Einschränkung, sondern lediglich als Teil der Lehre erachtet werden sollen. Es wird betont, dass eine Kombination der hierin beschriebenen Merkmale ohne weiteres möglich ist und explizit Teil der Offenbarung der vorliegenden Erfindung ist.

Es zeigen:
- Figur 1: eine Draufsicht auf eine Primäreinrichtung eines induktiven Ladesystems mit Erregerspulen, die Primäreinrichtung als ein erfindungsgemäßes Ausführungsbeispiel;
- Figur 2: eine Draufsicht auf eine Bandschichtanordnung einer Primärspule von einer Vorrichtung gemäß eines erfindungsgemäßen Ausführungsbeispiels;
- Figur 3: eine Seitenansicht auf die Bandschichtanordnung gemäß Fig. 2;
- Figur 4a - 4f: verschiedene Bandschichtanordnungen in der Seitenansicht; und
- Figur 5: eine perspektivische Ansicht eines induktiven Ladesystems mit einer erfindungsgemäßen Primäreinrichtung und einer Sekundäreinrichtung.

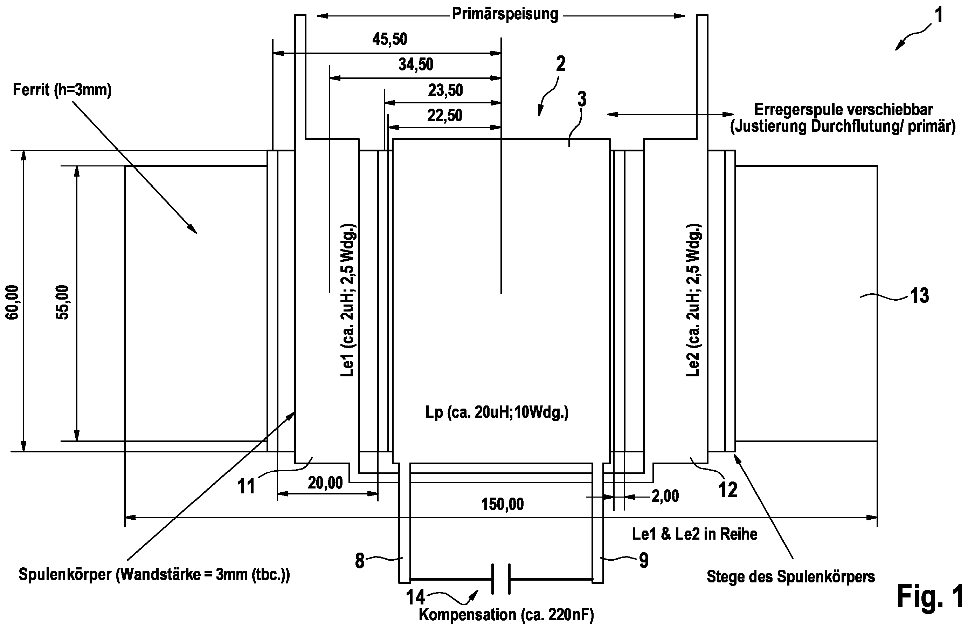

Figur 1 zeigt eine Draufsicht auf eine Primäreinrichtung 1 eines induktiven Ladesystems mit einer ersten und einer zweiten Erregerspule 11, 12, die Primäreinrichtung 1 bzw. Spulenvorrichtung 1 als ein erfindungsgemäßes Ausführungsbeispiel. Die Spulenvorrichtung 1 weist einen quaderförmigen Ferritkern 13 auf, um dessen Längsachse ein Spulenkörper 2 und die zwei Erregerspulen 11, 12 angeordnet bzw. gewickelt sind. Die Erregerspulen 11, 12 sind an jeweils einer Seite des Spulenkörpers 2 angeordnet und zu diesem beabstandet. Das bedeutet, dass die Erregerspulen 11, 12 nicht mit dem Spulenkörper 2 elektrisch verschaltet sind. Diese Anordnung hilft, ein über die Achse des Ferritkerns homogen und konstant ausgebildetes Magnetfeld durch die Erregerspulen 11, 12 zu erzeugen. Zusätzlich sind die Erregerspulen 11, 12 zu dem Spulenkörper 2 und insbesondere auf dem Ferritkern 13 jeweils verschiebbar ausgebildet, um die Magnetfeld-Durchflutung des Spulenkörpers 2 einzustellen. In dieser Figur sind die Erregerspulen seriell miteinander verschaltet, können alternativ aber auch separat bzw. einzeln mit Strom versorgt werden. Der Spulenkörper 2 weist eine Bandschichtanordnung 3, die um die Achse des Ferritkerns 13 gewickelt bzw. angeordnet ist, eine erste und eine zweite Anschlusskontaktierung 8, 9 und einen Zusatzkondensator 14 auf. Die erste Anschlusskontaktierung 8 ist an einem Ende der Bandschichtanordnung 3 und die zweite Anschlusskontaktierung 9 am gegenüberliegenden Ende der Bandschichtanordnung 3 ausgebildet bzw. mit diesem elektrisch verbunden. Zwischen den beiden Anschlusskontaktierungen 8, 9 ist eine Zusatzkapazität in Form eines Kondensators 14 verschaltet, der die Phasenverschiebung des induzierten Stroms aufgrund der Induktion zumindest teilweise oder vollständig durch die Kapazität kompensiert, wenn die in der Bandschichtanordnung 3 ausgebildete/n Kapazität/en nicht ausreicht bzw. ausreichen. Der Spulenkörper 2 hat zehn Wicklungen und die Erregerspulen 11, 12 haben jeweils zweieinhalb Wicklungen um den Ferritkern 13, wobei das Verhältnis der Wicklungen zur induzierten Stromstärke beiträgt.

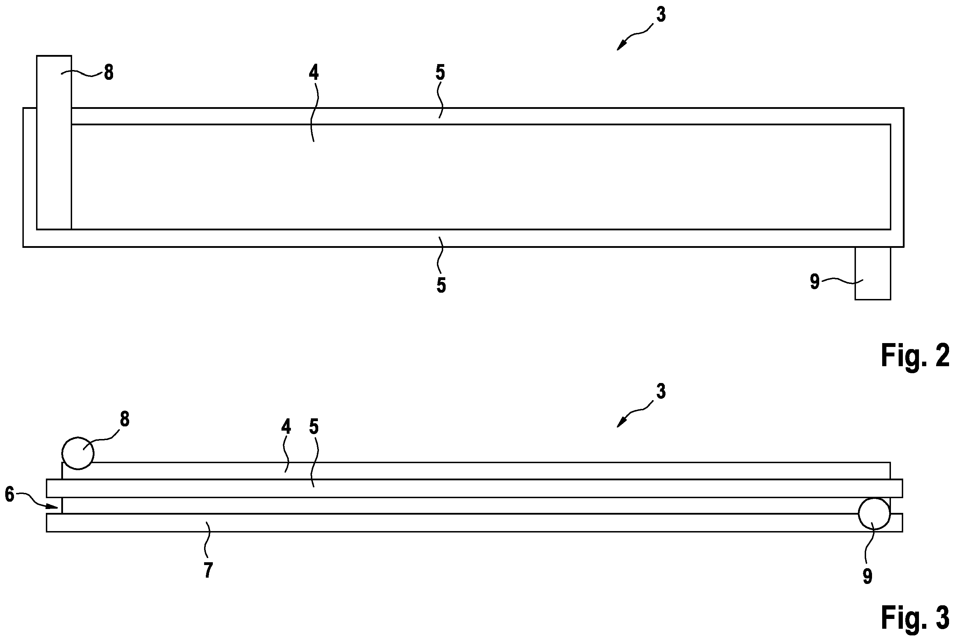

Figur 2 zeigt eine Draufsicht auf eine Bandschichtanordnung 3 einer Primärspule, insbesondere eines Spulenkörpers, wie dieser in Figur 1 gezeigt wurde. Die Bandschichtanordnung 3 ist dazu ausgelegt, um einen Ferritkern einer erfindungsgemäßen Primärvorrichtung gewickelt zu werden. Die Bandschichtanordnung 3 weist eine rechteckige bzw. bandförmige erste Leiterschicht 4, eine erste Isolationsschicht 5, eine zweite Leiterschicht und eine zweite Isolationsschicht auf, wobei die letzten beiden Elemente in Figur 2 durch die Überdeckung nicht sichtbar sind. In diesem erfindungsgemäßen Ausgestaltungsbeispiel sind die erste und die zweite Leiterschicht deckungsgleich ausgeformt; insbesondere sind die erste und die zweite Leiterschicht in ihrer Dimensionierung wie Länge, Breite und Dicke sowie Material identisch zueinander ausgebildet. Dasselbe gilt für die erste und die zweite Isolationsschicht. An einem Ende der Bandschichtanordnung 3 ist eine erste Anschlusskontaktierung 8 elektrisch mit der ersten Leiterschicht 4 verbunden und ausgebildet bzw. angeordnet. Am gegenüberliegenden Ende der Bandschichtanordnung 3 ist eine zweite Anschlusskontaktierung 9 elektrisch mit der zweiten Leiterschicht verbunden und ausgebildet bzw. angeordnet.

Figur 3 zeigt eine Seitenansicht auf die Bandschichtanordnung 3 gemäß Figur 2 mit der ersten Leiterschicht 4, der ersten Isolationsschicht 5, der zweiten Leiterschicht 6 und der zweiten Isolationsschicht 7 sowie der ersten und der zweiten Anschlusskontaktierung 8, 9. Die erste Isolationsschicht 5 hat die Funktion, die beiden Leiterschichten 4, 6 elektrisch voneinander zu trennen und zu beabstanden. Die zweiten Isolationsschicht 6 hat die Aufgabe, die zweite Leiterschicht 6 von etwaigen elektrisch leitenden Komponenten zu isolieren, die gegebenenfalls beim Aufwickeln der Bandschichtanordnung auf einen Ferritkern unterhalb der zweiten Leiterschicht 6 angeordnet sein könnten; insbesondere, wenn mehr als eine Wicklung ausgeführt und die zweite Leiterschicht 6 auf die erste Leiterschicht 4 angeordnet wird, isoliert die zweite Isolationsschicht die beiden Leiterschichten 4, 6 voneinander.

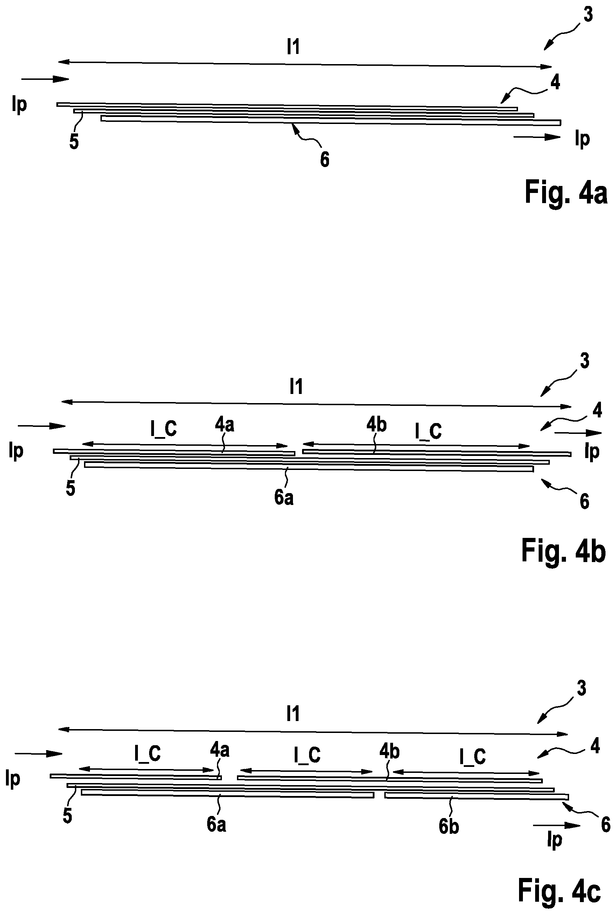

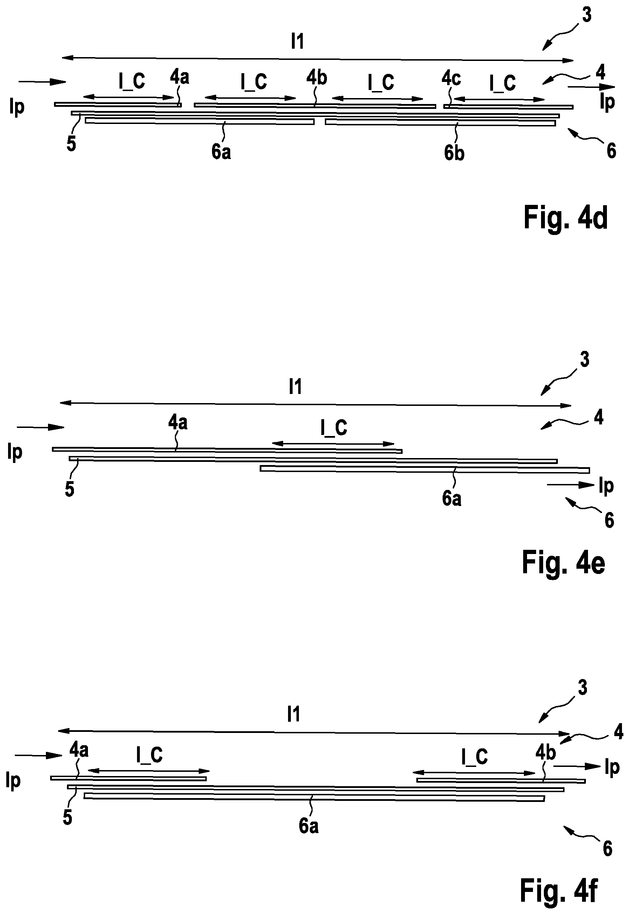

Figuren 4a bis 4f zeigen sechs verschiedene Bandschichtanordnungen 3 in der Seitenansicht als erfindungsgemäße Ausführungsbeispiele für einen Spulenkörper. Die Bandschichtanordnungen weisen jeweils eine erste Leiterschicht 4, eine erste Isolationsschicht 5 und eine zweite Leiterschicht 6 auf. In diesen Beispielen wurde die zweite Isolationsschicht weggelassen, um das Augenmerk auf das Muster der Abschnitte der ersten und der zweiten Leiterschicht 4, 6 zu richten. Während die Bandschichtanordnungen 3 der Figuren 4b, 4d und 4f im Wesentlichen achsensymmetrisch zu einer gedachten, mittig angeordneten, vertikalen Achse (bzw. zu einer vertikalen Ebene im 3-Dimensionalen) sind, ist die Anordnung der Schichten, insbesondere deren Abschnitte, in den Figuren 4a, 4c und 4e jeweils punktsymmetrisch (bzw. rotationssymmetrisch im 3-Dimensionalen).

Figur 4a zeigt eine erste Variante der Bandschichtanordnungen 3, wobei die erste Leiterschicht 4 die zweite Leiterschicht 6 im Wesentlichen vollständig überdeckt und vice versa. Aufgrund der maximal großen Flächenüberdeckung der Leiterschichten 4, 6 ist die zwischen den Leiterschichten erzeugte Kapazität am Größten. Der (Wechsel)Strom fließ an einem Ende der ersten Leiterschicht 4 hinein und am gegenüberliegenden Ende der zweiten Leiterschicht 6 hinaus.

Figur 4b zeigt eine zweite Variante der Bandschichtanordnungen 3, wobei die erste Leiterschicht 4 zwei voneinander getrennte Abschnitte 4a, 4b aufweist. Die zweite Leiterschicht 6 ist aus einem Abschnitt 6a gebildet, der den ersten und den zweiten Abschnitt 4a, 4b überlappt; dadurch werden zwei seriell geschaltete Kondensatoren gebildet. Der Strom fließ an einem Ende der ersten Leiterschicht 4, insbesondere beim ersten Abschnitt 4a, hinein und am gegenüberliegenden Ende der ersten Leiterschicht 4, insbesondere beim zweiten Abschnitt 4b, hinaus.

Figur 4c zeigt eine dritte Variante der Bandschichtanordnungen 3, wobei die erste Leiterschicht 4 zwei voneinander getrennte Abschnitte 4a, 4b und die zweite Leiterschicht 6 zwei voneinander getrennte Abschnitte 6a, 6b aufweisen. Dabei überdeckt der erste Abschnitt 6a der zweiten Leiterschicht 6 den ersten Abschnitt 4a und teilweise den zweiten Abschnitt 4b der ersten Leiterschicht 4. Dasselbe gilt für den zweiten Abschnitt 4b der ersten Leiterschicht 4 hinsichtlich der Abschnitte 6a, 6b der zweiten Leiterschicht 6. Der Strom fließ an einem Ende der ersten Leiterschicht 4, insbesondere beim ersten Abschnitt 4a, hinein und am gegenüberliegenden Ende der zweiten Leiterschicht 6, insbesondere beim zweiten Abschnitt 6b, hinaus.

Figur 4d zeigt eine vierte Variante der Bandschichtanordnungen 3, wobei die erste Leiterschicht 4 drei voneinander getrennte Abschnitte 4a, 4b, 4c und die zweite Leiterschicht 6 zwei voneinander getrennte Abschnitte 6a, 6b aufweisen.

Figur 4e zeigt eine fünfte Variante der Bandschichtanordnungen 3, wobei die erste Leiterschicht 4 einen Abschnitte 4a und die zweite Leiterschicht 6 einen Abschnitte 6a aufweisen. Im Vergleich zu Figur 4a sind die Abschnitte 4a, 6a verkürzt und überlappen bzw. überdecken sich nur teilweise.

Figur 4f zeigt eine sechste Variante der Bandschichtanordnungen 3, die ähnlich zu der Variante aus Figur 4b ist. Im Vergleich hierzu sind die Abschnitte 4a, 4b der ersten Leiterschicht 4 kürzer bzw. deren Abstand zueinander größer, so dass der Abschnitt 6a der zweiten Leiterschicht 6 eine längere bzw. größere Distanz überbrückt.

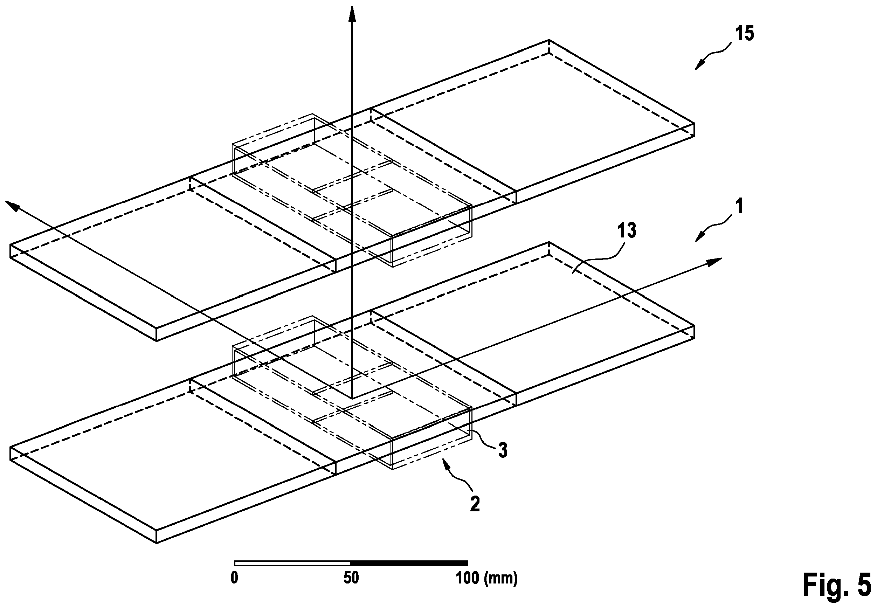

Figur 5 zeigt eine perspektivische Ansicht eines induktiven Ladesystems mit einer erfindungsgemäßen Primäreinrichtung 1 und einer parallel beabstandeten Sekundäreinrichtung 15. Die Primäreinrichtung 1 kann gemäß dem Ausführungsbeispiel in Figur 1 ausgebildet sein, das einen Ferritkern 13 und einen Spulenkörper 2 mit einer Bandschichtanordnung 13 aufweist. Die Sekundäreinrichtung 15 ist mit einer Spule ausgestattet, die von dem durch die Primäreinrichtung 1 erzeugten Magnetfeld durchflutet wird. Dadurch wird wiederum ein Strom in der Sekundäreinrichtung 15 induziert.

### Bezugszeichenliste

- 1: Spulenvorrichtung (Primärvorrichtung)
- 2: Spulenkörper
- 3: Bandschichtanordnung
- 4: erste Leiterschicht
- 4a: erster Abschnitt (der ersten Leiterschicht)
- 4b: zweiter Abschnitt (der ersten Leiterschicht)
- 4c: dritte Abschnitt (der ersten Leiterschicht)
- 5: erste Isolationsschicht
- 6: zweite Leiterschicht
- 6a: erster Abschnitt (der zweiten Leiterschicht)
- 6b: zweiter Abschnitt (der zweiten Leiterschicht)
- 7: zweite Isolationsschicht
- 8: erste Anschlusskontaktierung
- 9: zweite Anschlusskontaktierung
- 10: Ferritkern der Spulenvorrichtung
- 11: erste Erregerspule
- 12: zweite Erregerspule
- 13: Ferritkern
- 14: Zusatzkapazität/-kondensator
- 15: Spulenvorrichtung (Sekundärvorrichtung)

## Patentansprüche

1. Spulenkörper (2) zum Erzeugen eines Magnetfelds für eine Spule, wobei der Spulenkörper (2) um einen Kern der Spule wickelbar ist und wobei der Spulenkörper (2) eine Bandschichtanordnung (3) mit einer ersten Leiterschicht (4), einer ersten elektrischen Isolationsschicht (5), einer zweiten Leiterschicht (6) und einer zweiten elektrischen Isolationsschicht (7) umfasst,
**dadurch gekennzeichnet, dass**
die Schichten aufeinander angeordnet sind und
die erste Leiterschicht (4) und die zweite Leiterschicht (6) jeweils mindestens einen Abschnitt aufweisen, der sich mit mindestens einem Abschnitt der anderen Leiterschicht zumindest teilweise überdeckt.

2. Spulenkörper (2) nach Anspruch 1,
**dadurch gekennzeichnet, dass**
die erste Leiterschicht (4) und die zweite Leiterschicht (6) jeweils einen oder mehrere Abschnitte aufweisen, wobei jeder Abschnitt von den anderen Abschnitten derselben Leiterschicht elektrisch getrennt und/oder beabstandet ist und mindestens einen Abschnitt der anderen Leiterschicht zumindest teilweise überdeckt.

3. Spulenkörper (2) nach Anspruch 1 oder 2,
**gekennzeichnet durch**
eine erste Anschlusskontaktierung (8) an einer Seite der Bandschichtanordnung (3) und eine zweite Anschlusskontaktierung (9) an der gegenüberliegenden Seite der Bandschichtanordnung (3), wobei die erste Anschlusskontaktierung (8) mit der ersten Leiterschicht (4) oder der zweiten Leiterschicht (6) verbunden ist und die zweite Anschlusskontaktierung (9) mit der ersten Leiterschicht (4) oder der zweiten Leiterschicht (6) verbunden ist.

4. Spulenkörper (2) nach Anspruch 3,
**dadurch gekennzeichnet, dass**
die erste Anschlusskontaktierung (8) und die zweite Anschlusskontaktierung (9) jeweils an einem eigenen Abschnitt der Leiterschicht ausgebildet bzw. angeordnet sind, die die größere Anzahl von Abschnitten aufweist.

5. Spulenkörper (2) nach Anspruch 3,
**dadurch gekennzeichnet, dass**
die erste Anschlusskontaktierung (8) und die zweite Anschlusskontaktierung (9) an einem eigenen Abschnitt der ersten Leiterschicht (4) und der zweiten Leiterschicht (6), oder umgekehrt, ausgebildet bzw. angeordnet sind.

6. Spulenkörper (2) nach einem der Ansprüche 3 bis 5,
**gekennzeichnet durch**
eine Kapazität, die zur Selbstkompensation der Primärspule mit der ersten Anschlusskontaktierung (8) und der zweiten Anschlusskontaktierung (9) verbunden ist.

7. Spulenkörper (2) nach einem der Ansprüche 3 bis 5,
**dadurch gekennzeichnet, dass**
die erste Anschlusskontaktierung (8) und die zweite Anschlusskontaktierung (9) miteinander elektrisch kurzgeschlossen sind.

8. Vorrichtung zum Erzeugen eines Magnetfelds für ein induktives Ladesystem, mit einem Ferritkern (13),
**gekennzeichnet durch**
mindestens einen Spulenkörper (2) nach einem der Ansprüche 1 bis 7,
wobei der Spulenkörper (2) mindestens eine Wicklung um den Ferritkern (13) aufweist.

9. Vorrichtung nach Anspruch 8,
**gekennzeichnet durch**
mindestens eine Erregerspule (11) zum Erzeugen eines Erregermagnetfelds für den Spulenkörper (2) als Primärspule, wobei die Erregerspule (11) um den Ferritkern (13) gewickelt und neben der Primärspule angeordnet ist.

10. Vorrichtung nach Anspruch 8 oder 9,
**dadurch gekennzeichnet, dass**
zwei Erregerspulen (11, 12) um den Ferritkern (13) gewickelt sind, die beidseitig von der Primärspule angeordnet sind.

11. Vorrichtung nach Anspruch 9 oder 10,
**dadurch gekennzeichnet, dass**
die Erregerspulen (11, 12) verschiebbar zu der Primärspule ausgebildet sind.

12. Vorrichtung nach einem der Ansprüche 9 bis 11,
**dadurch gekennzeichnet, dass**
die Anzahl der Windungen des Spulenkörpers (2) größer ist als die Anzahl der Windungen der Erregerspulen (11, 12).

13. Vorrichtung nach einem der Ansprüche 8 bis 12,
**dadurch gekennzeichnet, dass**
die erste elektrische Isolationsschicht (5) und die zweite elektrische Isolationsschicht (7) an einer oder mehr Seitenrändern der ersten Leiterschicht (4) und/oder der zweiten Leiterschicht (6) hinausragen.

14. Vorrichtung nach einem der Ansprüche 8 bis 13,
**dadurch gekennzeichnet, dass**
die Leiterschichten (4, 6) aus einer Metallschicht und die elektrischen Isolationsschichten (5, 7) aus einer Kunststoffschicht gebildet sind.

15. Vorrichtung nach einem der Ansprüche 8 bis 14,
**dadurch gekennzeichnet, dass**
der Spulenkörper (2) eine rechteckige Fläche und mehrere Wicklungen um den Ferritkörper (13) aufweist.

## Claims

1. A coil body (2) for generating a magnetic field for a coil, wherein the coil body (2) is windable around a core of the coil, and wherein the coil body (2) includes a strip layer arrangement (3) with a first conductive layer (4), a first electrical insulating layer (5), a second conductive layer (6) and a second electrical insulating layer (7),
**characterized in that**
the layers are arranged one on top of the other and
the first conductive layer (4) and the second conductive layer (6) each have at least one section that at least partially overlaps with at least one section of the other conductive layer.

2. The coil body (2) according to claim 1,
**characterized in that**
the first conductive layer (4) and the second conductive layer (6) each include one or more sections, wherein each section is electrically isolated and/or spaced apart from the other sections of the same conductive layer and at least partially overlaps at least one section of the other conductive layer.

3. The coil body (2) according to claim 1 or 2,
**characterized in that**
a first terminal contact (8) is provided on one side of the strip layer arrangement (3) and a second terminal contact (9) is provided on the opposite side of the strip layer arrangement (3), wherein the first terminal contact (8) is connected to the first conductive layer (4) or to the second conductive layer (6) and the second terminal contact (9) is connected to the first conductive layer (4) or to the second conductive layer (6).

4. The coil body (2) according to claim 3,
**characterized in that**
the first terminal contact (8) and the second terminal contact (9) are each formed or arranged on a respective section of the conductive layer which has the greater number of sections.

5. The coil body (2) according to claim 3,
**characterized in that**
the first terminal contact (8) and the second terminal contact (9) are formed or arranged on a respective section of the first conductive layer (4) and of the second conductive layer (6), or vice versa.

6. The coil body (2) according to any one of claims 3 to 5,
**characterized by**
a capacitance that is connected to the first terminal contact (8) and to the second terminal contact (9) for the self-compensation of the primary coil.

7. The coil body (2) according to any one of claims 3 to 5,
**characterized in that**
the first terminal contact (8) and the second terminal contact (9) are electrically short-circuited with each other.

8. A device for generating a magnetic field for an inductive charging system, with a ferrite core (13),
**characterized by**
at least one coil body (2) according to any one of claims 1 to 7, wherein the coil body (2) includes at least one winding around the ferrite core (13).

9. The device according to claim 8,
**characterized by**
at least one exciter coil (11) for generating an exciter magnetic field for the coil body (2) as the primary coil, wherein the exciter coil (11) is wound around the ferrite core (13) and is arranged next to the primary coil.

10. The device according to claim 8 or 9,
**characterized in that**
two exciter coils (11, 12) are wound around the ferrite core (13), which are arranged on either side of the primary coil.

11. The device according to claim 9 or 10,
**characterized in that**
the exciter coils (11, 12) are designed to be movable relative to the primary coil.

12. The device according to any one of claims 9 to 11,
**characterized in that**
the number of windings of the coil body (2) is greater than the number of windings of the exciter coils (11, 12).

13. The device according to any one of claims 8 to 12,
**characterized in that**
the first electrical insulating layer (5) and the second electrical insulating layer (7) project beyond one or more side edges of the first conductive layer (4) and/or of the second conductive layer (6).

14. The device according to any one of claims 8 to 13,
**characterized in that**
the conductive layers (4, 6) are formed from a metal layer and the electrical insulating layers (5, 7) are formed from a plastic layer.

15. The device according to any one of claims 8 to 14,
**characterized in that**
the coil body (2) has a rectangular surface area and includes a plurality of windings around the ferrite core (13).

## Revendications

1. Corps de bobine (2), destiné à générer un champ magnétique pour une bobine, le corps de bobine (2) pouvant être enroulé autour d'un noyau de la bobine et le corps de bobine (2) comprenant un ensemble de couches de bandes (3) doté d'une première couche conductrice (4), d'une première couche d'isolation (5) électrique, d'une deuxième couche conductrice (6) et d'une deuxième couche d'isolation (7) électrique,
**caractérisé en ce que**
les couches sont placées les unes sur les autres et
la première couche conductrice (4) et la deuxième couche conductrice (6) comportent chacune au moins une portion qui est en recouvrement au moins partiel avec au moins une portion de l'autre couche conductrice.

2. Corps de bobine (2) selon la revendication 1,
**caractérisé en ce que**
la première couche conductrice (4) et la deuxième couche conductrice (6) comportent chacune une ou plusieurs portions, chaque portion étant électriquement séparée et / ou écartée des autres portions de la même couche conductrice et recouvrant au moins partiellement au moins une portion de l'autre couche conductrice.

3. Corps de bobine (2) selon la revendication 1 ou 2,
**caractérisé par**
un premier contact de raccordement (8) sur un côté de l'ensemble de couches de bandes (3) et un deuxième contact de raccordement (9) sur le côté opposé de l'ensemble de couches de bandes (3), le premier contact de raccordement (8) étant connecté avec la première couche conductrice (4) ou la deuxième couche conductrice (6) et le deuxième contact de raccordement (9) étant connecté avec la première couche conductrice (4) ou la deuxième couche conductrice (6).

4. Corps de bobine (2) selon la revendication 3,
**caractérisé en ce que**
le premier contact de raccordement (8) et le deuxième contact de raccordement (9) sont conçus ou placés chacun sur une portion respective de la couche conductrice qui comporte le plus grand nombre de portions.

5. Corps de bobine (2) selon la revendication 3,
**caractérisé en ce que**
le premier contact de raccordement (8) et le deuxième contact de raccordement (9) sont conçus ou placés sur une portion respective de la première couche conductrice (4) et de la deuxième couche conductrice (6) ou inversement.

6. Corps de bobine (2) selon l'une quelconque des revendications 3 à 5, **caractérisé par**
une capacité, qui pour l'autocompensation de la bobine primaire est connectée avec le premier contact de raccordement (8) et le deuxième contact de raccordement (9).

7. Corps de bobine (2) selon l'une quelconque des revendications 3 à 5,
**caractérisé en ce que**
le premier contact de raccordement (8) et le deuxième contact de raccordement (9) sont électriquement court-circuités entre eux.

8. Dispositif, destiné à générer un champ magnétique pour un système de charge inductif, doté d'un noyau en ferrite (13), **caractérisé par**
au moins un corps de bobine (2) selon l'une quelconque des revendications 1 à 7,
le corps de bobine (2) comportant au moins un enroulement autour du noyau en ferrite (13).

9. Dispositif selon la revendication 8,
**caractérisé par**
au moins une bobine d'excitation (11), destinée à générer un champ magnétique d'excitation pour le corps de bobine (2) en tant que bobine primaire, la bobine d'excitation (11) étant enroulée autour du noyau en ferrite (13) et étant placée à côté de la bobine primaire.

10. Dispositif selon la revendication 8 ou 9,
**caractérisé en ce que**
deux bobines d'excitation (11, 12), qui sont placées de part et d'autre de la bobine primaire, sont enroulées autour du noyau en ferrite (13).

11. Dispositif selon la revendication 9 ou 10,
**caractérisé en ce que**
les bobines d'excitation (11, 12) sont conçues de sorte à être déplaçables par rapport à la bobine primaire.

12. Dispositif selon l'une quelconque des revendications 9 à 11,
**caractérisé en ce que**
le nombre de spires du corps de bobine (2) est supérieur au nombre de spires des bobines d'excitation (11, 12).

13. Dispositif selon l'une quelconque des revendications 8 à 12,
**caractérisé en ce que**
la première couche d'isolation (5) électrique et la deuxième couche d'isolation (7) électrique dépassent de l'un ou de plusieurs bords latéraux de la première couche conductrice (4) et / ou de la deuxième couche conductrice (6).

14. Dispositif selon l'une quelconque des revendications 8 à 13,
**caractérisé en ce que**
les couches conductrices (4, 6) sont constituées d'une couche métallique et les couches d'isolation (5, 7) électrique sont constituées d'une couche de matière plastique.

15. Dispositif selon l'une quelconque des revendications 8 à 14,
**caractérisé en ce que**
le corps de bobine (2) comporte une surface rectangulaire et plusieurs enroulements autour du noyau en ferrite (13).
